# EUROPEAN PATENT SPECIFICATION

(11) **EP 3 069 601 B1**
(45) Date of publication and mention of the grant of the patent: **15.08.2018**
(21) Application number: 16160528.2
(22) Date of filing: 15.03.2016
(51) Int. Cl.: A01G 13/00, E04F 10/02, A01G 13/02

(54) **PROTECTION DEVICE FOR OUTDOOR ORNAMENTAL PLANTS, OR OTHER MATERIAL**
SCHUTZVORRICHTUNG FÜR ZIERPFLANZEN IM AUSSENBEREICH ODER ANDERES MATERIAL
DISPOSITIF DE PROTECTION POUR LES PLANTES ORNEMENTALES EXTÉRIEURES OU AUTRE MATERIEL

(30) Priority: 18.03.2015 IT MO20150061
(43) Date of publication of application: 21.09.2016
(73) Proprietor: Delladio, Mauro, 38030 Daiano (TN) (IT); Delladio, Fabrizio, 39040 Salorno (BZ) (IT); Delladio, Riccardo, 38033 Carano (TN) (IT)
(72) Inventor: Delladio, Mauro, 38030 Daiano (TN) (IT); Delladio, Fabrizio, 39040 Salorno (BZ) (IT); Delladio, Riccardo, 38033 Carano (TN) (IT)
(74) Representative: Crugnola, Pietro

(56) References cited:
- DE-U1- 8 809 301
- DE-U1- 20 106 237
- DE-U1- 29 513 171
- FR-A- 1 178 331

## Description

The present invention relates to a protection device for protecting outdoor ornamental plants or another material from inclement weather or also from direct sunlight. In particular, the protection device according to the invention is intended both for protecting ornamental pot plants located in pot holders located outside on the balconies of houses or any other material positioned close to vertical surfaces.

The protection of ornamental plants exposed on balconies or other things is generally obtained with improvised means such as sticks and plastic sheets applied extemporaneously to the railing of balconies or to a wall.

DE 88 09 301 U1 discloses a protection device for outdoor ornamental plants, or other material, comprising a protection element, suitable for protecting said ornamental plants, or said other material, from the atmospheric agents and from direct sunlight, bearing elements for supporting said protection element and fixing elements for fixing said bearing elements to a supporting element, wherein each bearing element comprises a first component, a first end of which may be removably coupled with a respective fixing element.

Object of the present invention is to provide a protection device for protecting outdoor ornamental plants, or another material, from inclement weather or also from direct sunlight, that is fixable simply and securely, is easy to fit and is versatile, so as to be adapted easily to the needs of those who use it.

The object of the invention is achieved with a protection device according to claim 1.

Owing to the invention it is possible to make a protection device for protecting outdoor ornamental plants, or another material, that is easy to make, easy to install and easily adaptable to different configurations and dimensions of an area to be protected in which the material to be protected is arranged, for example outdoor ornamental plants inserted into a container fixed to the railing of a balcony.

Some embodiments the invention are disclosed below, merely by way of non-limiting example, with reference to the attached drawings, in which:
Figure 1 is a perspective view of a protection device according to the invention fixed to the railing of a balcony;
Figure 2 is a perspective view like that in Figure 1, rotated by 180° with respect to the view in Figure 1;
Figure 3 is a perspective view of a supporting arm of the protection device according to the invention;
Figure 4 is an exploded perspective view of the supporting arm of Figure 3;
Figure 5 is a perspective view of a first component of the supporting arm;
Figure 6 is a longitudinal section of the component in Figure 5;
Figure 7 is a perspective view of a second component of the supporting arm;
Figure 8 is a longitudinal section of the second component of Figure 7;
Figure 9 is a perspective view of a fixing element of the supporting arm of Figures 3 and 4;
Figure 10 is a perspective view like that in Figure 9, rotated by 180° with respect to the view in Figure 9;
Figure 11 is an elevation view of the fixing element;
Figure 12 is section XII-XII of Figure 11;
Figure 13 is a top view of the fixing element;
Figure 14 is a perspective view of a spacer element that is associable with the fixing element;
Figure 15 is an elevation view of the spacer element;
Figure 16 is section XVI-XVI of Figure 15;
Figure 17 is a perspective view of a protection sheet that is fixable to a pair of supporting arms;
Figure 18 is a perspective view of a version of the protection sheet of Figure 17;
Figure 19 illustrates some versions of the first component of the supporting arm;
Figure 20 is a perspective view of a protection accessory associable with a second component of the supporting arm.

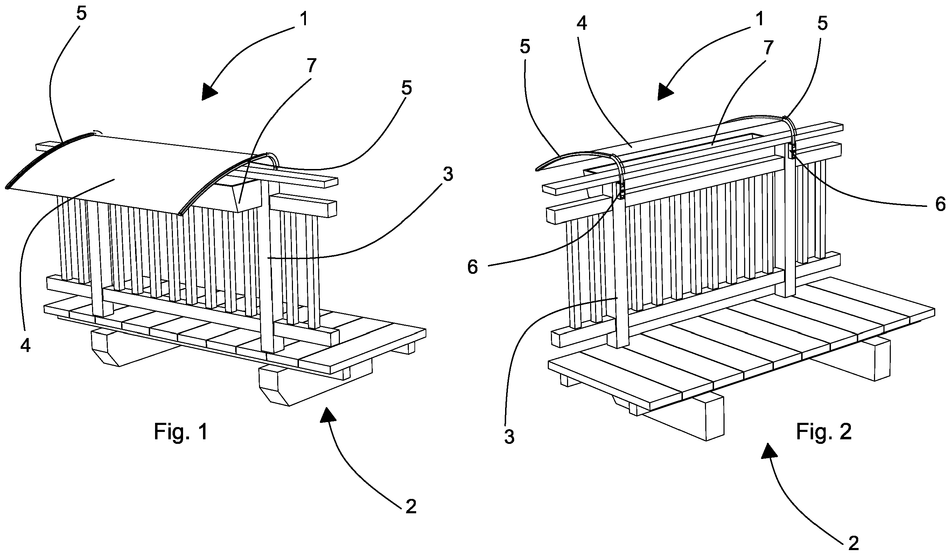

In Figures 1 and 2 a protection device 1 according to the invention is illustrated, which is fixed to the railing 3 of a balcony 2 so as to cover and protect a receptacle 7, which is also fixed to the railing 3, in which vases of ornamental plants can be housed.

The protection device 1 comprises a protection sheet 4 that can be made, for example, of cloth or plastics, or of any other material that is suitable for withstanding inclement weather such as rain, snow, or hail.

The protection sheet 4, having for example a substantially rectangular shape is fixed, along a pair of opposite sides, to two bearing elements 5 which are in turn fixed to the railing 3 of the balcony 2 by a respective fixing element 6.

Each supporting element 5 consists of a first component 8, by means of which the supporting element is fixed to the railing 3 of the balcony 2, and of at least one second component 11 that is fixable to the first component 8 and constitutes a lengthening of the first component 8. The supporting element 5 can comprise a plurality of second components 11, fixed together and to the first component 8, which are variable in number, each of which constitutes a further lenghtening of the first component 8, to adapt the length of the supporting element 5 to the dimensions of the zone to be protected.

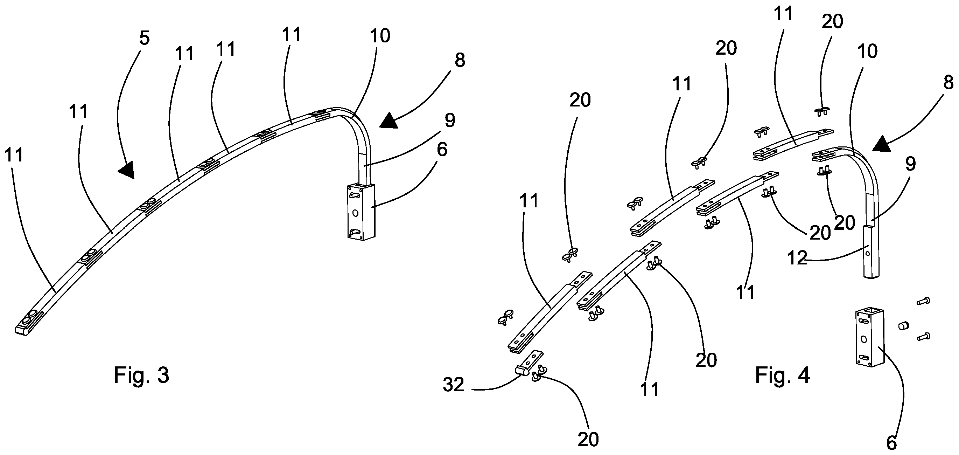

The first component 8 comprises a substantially rectilinear first part 9 and a curvilinear second part 10, integral with the first part 9 and having an arc shape. The first part 9 is provided with a first end 12 intended for being coupled with the fixing element 6, so as to be able to be fixed to the railing 3, whereas the second part 10 is provided with a fork-shaped second end 13 intended for being coupled with a second component 11. The second end 13 is provided with through holes 14 that are intended for receiving fixing elements 20 (Figure 4), for example screws, bolts, or joint rivets, for fixing the first component 8 to a second component 11. The through holes 14 can be threaded.

The second component 11 is provided with a first fork-shaped end 16 and with a second end 17 having a flattened shape, having a shape and dimensions that are such as to be able to be inserted into the first fork-shaped end 16 of another second component 11, or into the second fork-shaped end 13 of the first component 8.

The first end 16 is provided with further through holes 18 intended for receiving the fixing elements20, for fixing the second component 11 to another second component 11.

The second end 17 is provided with still further through holes 19 intended for receiving the fixing elements20, for fixing the second component 11 to another second component 11, or to the first component 8.

The further through holes 18 and the still further through holes 19 can be threaded.

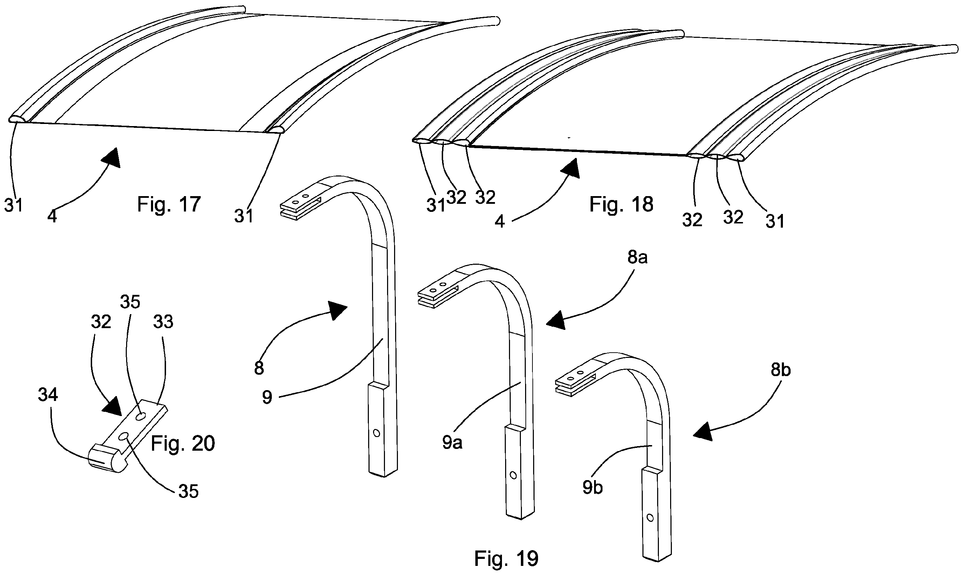

With the second component 11 that constitutes the free end of the supporting element 5 a protection accessory 32 is associable (Figure 20) consisting of a flattened body 33 with a rounded end 34. The flattened body 33 has a shape and dimensions that are such as to be able to be inserted into the first fork-shaped end 16 of the second component 11. The flattened body 33 is further provided with other through holes 35 intended for receiving the fixing elements 20 for fixing the protection accessory 32 to the second component 11. The protection accessory 32 is used to cover sharp corners of the fork-shaped first end 16 of the second component 11, to prevent the sharp corners being able to harm persons or damage objects that accidentally knock against the free end of the supporting element 5.

The connection between the first component 8, the second component 11, and between the second components 11 rather than being made with the fixing elements 20, can also be made as a joint, for example with dovetail joints, by suitably configuring the second end 13 of the first component 8 and the first end 16 e the second end 17 of the second component 11.

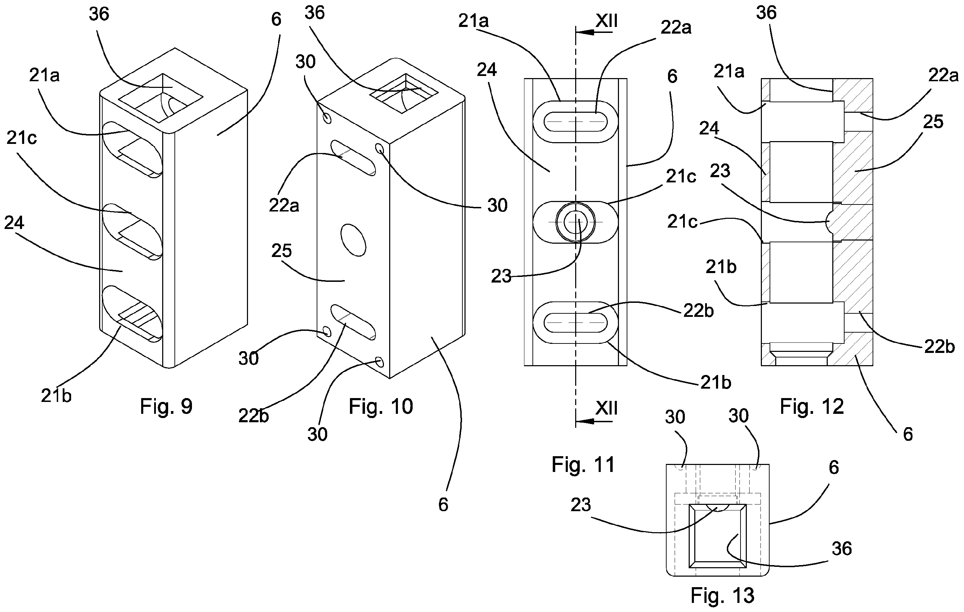

In Figures 9 to 13 the fixing element 6 is illustrated by means of which the bearing elements 5 can be fixed to the railing 3 of a balcony 2 or to a wall.

The fixing element 6 has a substantially parallelepiped shape and is provided with a longitudinal cavity 36 having a shape and dimensions such as to be able to couple with the first end 12 of the first component 8 of the supporting element 5. Further, the cross section of the longitudinal cavity 36 and of the first end 12 of the first component 8 of the supporting element 5 can be chosen in such a manner as to enable the first end 12 to be inserted into the fixing element 6 in two different positions rotated by 180° to one another. For example, both the longitudinal cavity 36, and the first end 12 can have a rectangular cross section.

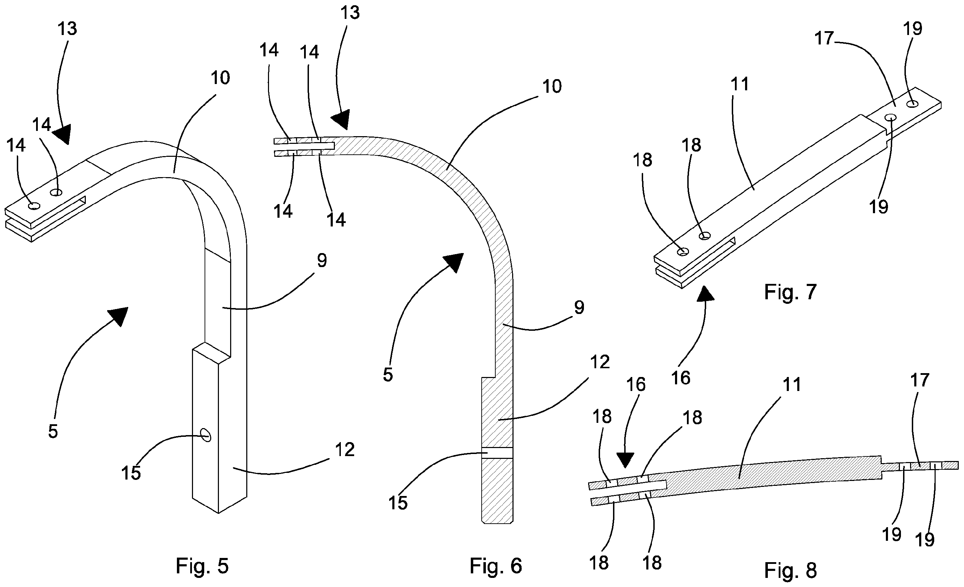

Inside the longitudinal cavity 36 a locking element 23 is arranged, consisting for example of a retractable ball, intended for locking said first end 12 in the longitudinal cavity 36, by being inserted into a transverse hole 15 (Figures 5 and 6) of said first end 12.

On a first face 25 of the fixing element 6 two slots 22a and 22b are made, whereas on a second face 24, opposite the first face 25, three windows 21a, 21b, 21c, are made, two of which 21a and 21b are placed opposite the corresponding slots 22a and 22b, a third window 21c being placed opposite the locking element 23.

Through the windows 21a, 21b and the slots 22a, 22b it is possible to insert fixing means, for example screws or expansion bolts, to connect the fixing element 6 to the railing 3 or to a wall. Through the third window 21c it is possible to reach from outside the locking element 23, if it is necessary to intervene thereupon, for any reason.

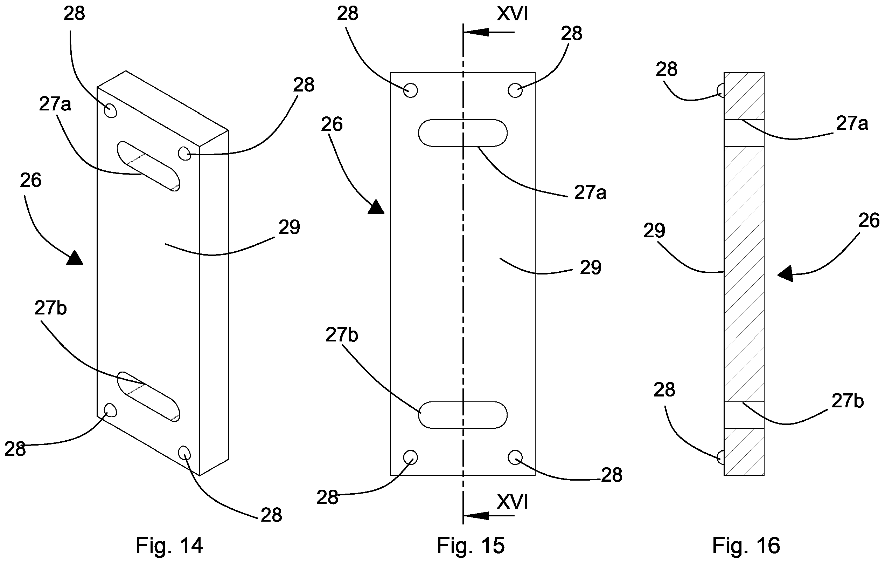

In Figures 14 to 16 a spacer element 26 is illustrated that is associable with the fixing element 6, to space the fixing element 6 away from the railing 3, to adapt the protection device 1 according to the invention better to the type of balcony and to the type of railing to which the device is fixed.

The spacer element 26 has a parallelepiped shape and is provided, on one face 29 thereof, with four protuberances 28, each of which is arranged near a vertex of the face 29. The protuberances 28 are intended for pressure coupling with corresponding recesses 30 made near the vertices of the first face 25 of the fixing element 6, for fixing the spacer element 26 to the fixing element 6.

The spacer element 26 is provided with a pair of further slots 27a and 27b, which, when the spacer element 26 is coupled with the fixing element 6, are aligned with the slots 22a and 22b of the fixing element, respectively. The further slots 27a and 27b are used for the passage of the fixing means that is used for connecting the fixing element 6 to the railing 3, or to a wall.

All the components of the supporting element 5, the fixing element 6 and the spacer element 26 can be made of any suitable material, for example they can be made of metal, plastics, recycled PVC, wood, etc.

In Figure 17 a first embodiment is illustrated of the protection sheet 4 that is provided on two opposite edges with respective tubular slots 31 that can be inserted into the bearing elements 5 to anchor the protection sheet to the bearing elements.

The tubular slots 31 can be made in various modes, for example by folding on the sheet 4 the aforesaid opposite edges and fixing the opposite edges to the rest of the sheet by sewing, or by fixing strips of Velcro to the edges and to the sheet 4, such that it is possible to fix the folded edge by said strips of Velcro.

In Figure 18 another embodiment of the sheet 4 is shown, in which the sheet is provided with a plurality of further tubular slots 32 parallel to the tubular slots 31 and made, for example, by a plurality of parallel seams. The further tubular slots 32 can also be distributed over the entire surface of the sheet 4, making the sheet with a double layer of material and obtaining the tubular slots 31 and the further tubular slots 32 by a series of seams that are parallel to one another.

Figure 19 illustrates three embodiments 8, 8a, and 8b of the first part of the supporting element 5. The three embodiments differ from one another by the different length of the first component 9, 9a, 9b, which enables the protection device 1 according to the invention to be adapted to the shape and dimensions of the zone to be protected.

## Claims

1. Protection device (1) for outdoor ornamental plants, or other material, comprising a protection element (4), suitable for protecting said ornamental plants, or said other material, from the atmospheric agents and from direct sunlight, bearing elements (5) for supporting said protection element (4) fixing elements (6), for fixing said bearing elements to a supporting element, each bearing element (5) comprising a first component (8), a first end (12) of which being removably coupled with a respective fixing element (6) and at least one second component (11) that may be fixed to a second end (13) of said first component (8), said at least one second component (11) forming a lengthening of said first component (8), **characterized in that** said first component (8) comprises a substantially rectilinear first part (9) and a curvilinear second part (10), said first part (9) comprising said first end (12) and said second part (10) comprising said second end (13).

2. Protection device (1) according to claim 1, **characterised in that** it comprises a plurality of second components (11) that may be fixed together and to the first component (8), .

3. Protection device (1) according to claim 1 or 2, wherein the second end (13) of said first component (8) is fork-shaped and is provided with through holes (14) that are suitable for receiving fixing elements (20).

4. Protection device (1) according to claim 3, wherein said at least one second component (11) is provided with a first end (16) having a fork shape and with a second end (17) having a flattened shape, said second end (17) having a shape and dimensions that are such as to be inserted into the second fork-shaped end (13) of said first component (8), or into the first fork-shaped end (16) of another second component (11).

5. Protection device (1) according to claim 4, wherein the first end (16) of said at least one second component (11) is provided with further through holes (18) that are intended for receiving said fixing elements (20), for fixing said at least one second component (11) to another second component (11), and the second end (17) of said at least one second component (11) is provided with still further through holes (19) that are intended for receiving said fixing elements (20), for fixing said at least one second component (11) to another second component (11), or to the first component (8).

6. Protection device (1) according to any preceding claim, wherein said fixing element (6) has a substantially parallelepipedon shape and is provided with a longitudinal cavity (36) having a shape and dimensions that are such as to be able to be coupled with the first end (12) of the first component (8) of the bearing element (5).

7. Protection device (1) according to claim 6, wherein inside said longitudinal cavity (36) there is arranged a locking element (23) that is suitable for locking in a removable manner said first end (12) in the longitudinal cavity (36), the locking element (23) being inserted into a transverse hole (15) of said first end (12).

8. Protection device (1) according to claim 7, wherein on a first face (25) of the fixing element (6) two slots (22a and 22b) are made, whereas on a second face (24), opposite the first face (25), three windows (21a, 21b, 21c) are made, two of which (21a and 21b) are placed opposite the corresponding slots (22a and 22b), a third window (21c) being placed opposite the locking element (23).

9. Protection device (1) according to claim 8, further comprising a spacer element (26) that is associable with said fixing element (6), has a parallelepiped shape and is provided, on one of its faces (29), with four protuberances (28), each of which is arranged near a vertex of the face (29), said protuberances (28) being intended for pressure coupling with corresponding recesses (30) made near the vertices of the first face (25) of the fixing element (6).

10. Protection device (1) according to claim 9, wherein said spacer element (26) is provided with a pair of further slots (27a and 27b), that, when the spacer element (26) is coupled with the fixing element (6), are aligned with the slots (22a and 22b) of the fixing element (6), respectively.

11. Protection device (1) according to any preceding claim, wherein said protection element (4) takes the form of a sheet and is provided on two opposite sides with respective tubular slots (31) suitable for being inserted on respective bearing elements (5).

12. Protection device (1) according to claim 12, wherein each tubular slot (31) is associated with at least one further tubular slot (32) that is parallel to the tubular slot (31).

13. Protection device (1) according to claim 12, comprising a plurality of further tubular slots (32) that are parallel to one another and parallel to said tubular slots (31), said further tubular slots (32) being distributed over the entire surface of said protection element (4).

14. Protection device (1) according to any preceding claim, further comprising a protection accessory (32) provided with a flattened body (33) with a rounded end (34), said flattened body (33) having a shape and dimensions that are such as to be inserted into the first fork-shaped end (16) of a second component (11).

## Patentansprüche

1. Schutzvorrichtung (1) für dekorative Außenpflanzen oder ein anderes Material, mit einem Schutzelement (4), das geeignet ist, die dekorativen Pflanzen oder das andere Material gegenüber atmosphärischen Bestandteilen und gegenüber direktem Sonnenlicht zu schützen, und das Tragelemente (5) aufweist, um die Fixierelemente (6) zur Aufnahme des Schutzelementes (4) zu tragen, um die Trageelemente an einem Aufnahmeelement zu fixieren, wobei jedes Trageelement (5) eine erste Komponente (8) aufweist, von der ein erstes Ende (12) lösbar mit einem betreffenden Fixierelement (6) gekoppelt ist, und mit wenigstens einer zweiten Komponente (11), die an einem zweiten Ende (13) der ersten Komponente (8) befestigt werden kann, wobei die wenigstens eine zweite Komponente (11) eine Verlängerung der ersten Komponente (8) bildet, **dadurch gekennzeichnet, dass** die erste Komponente (8) einen im Wesentlichen rechteckförmigen ersten Teil (9) und ein gekrümmtes zweites Teil (10) aufweist, wobei das erste Teil (9) das erste Ende (12) aufweist, und wobei das zweite Teil (10) das zweite Ende (13) aufweist.

2. Schutzvorrichtung (1) nach Anspruch 1, **dadurch gekennzeichnet, dass** sie eine Mehrzahl von zweiten Komponenten (11) aufweist, die miteinander und mit der ersten Komponente (8) verbunden sein können.

3. Schutzvorrichtung (1) nach Anspruch 1 oder 2, bei der das zweite Ende (13) der ersten Komponente (8) gabelförmig ist und mit Durchgangslöchern (14) versehen ist, die geeignet sind, um Fixierelemente (20) aufzunehmen.

4. Schutzvorrichtung (1) nach Anspruch 3, bei der die wenigstens eine zweite Komponente (11) mit einem ersten Ende (16) versehen ist, die eine Gabelform aufweist und mit einem zweiten Ende (17), das eine abgeflachte Form aufweist, wobei das zweite Ende (17) eine derartige Form und Größe aufweist, dass es in das zweite gabelförmige Ende (13) der ersten Komponente (8) oder in das erste gabelförmige Ende (16) der anderen zweiten Komponente (11) eingeführt werden kann.

5. Schutzvorrichtung (1) nach Anspruch 4, bei der das erste Ende (16) der wenigstens einen zweiten Komponente (11) mit weiteren Durchgangslöchern (18) versehen ist, die dazu vorgesehen sind, die Fixierelemente (20) aufzunehmen, um die wenigstens eine zweite Komponente (11) an einer anderen zweiten Komponente (11) zu fixieren, und wobei das zweite Ende (17) der wenigstens einen zweiten Komponente (11) mit weiteren Durchgangslöchern (19) versehen ist, die dazu ausgebildet sind, die Fixierelemente (20) aufzunehmen, um die wenigstens eine zweite Komponente (11) an einer anderen zweiten Komponente (11) oder an der ersten Komponente (8) zu fixieren.

6. Schutzvorrichtung (1) nach irgendeinem vorhergehenden Anspruch, bei der das Fixierelement (6) eine im Wesentlichen parallelepipedische Form aufweist und mit einem längsseitigen Hohlraum (36) versehen ist, der eine Form und Größe aufweist, derart, dass eine Kopplung mit dem ersten Ende (12) der ersten Komponente (8) des Trageelementes (5) ermöglicht ist.

7. Schutzvorrichtung (1) nach Anspruch 6, wobei innerhalb des längsseitigen Hohlraums (36) ein Verriegelungselement (23) vorgesehen ist, das geeignet ist, das erste Ende (12) in dem längsseitigen Hohlraum (36) lösbar zu verriegeln, wobei das Verriegelungselement (23) in ein Querloch (15) des ersten Endes (12) einführbar ist.

8. Schutzvorrichtung (1) nach Anspruch 7, bei der an einer ersten Fläche (25) des Fixierelementes (6) zwei Schlitze (22a und 22b) ausgebildet sind, wobei an einer zweiten Fläche (24) gegenüber der ersten Fläche (25) drei Fenster (21a, 21b, 21c) gebildet sind, von denen zwei (21a und 21b) gegenüber den korrespondierenden Schlitzen (22a und 22b) angeordnet sind, und wobei ein drittes Fenster (21c) gegenüber dem Verriegelungselement (23) angeordnet ist.

9. Schutzvorrichtung (1) nach Anspruch 8, die ferner ein Abstandselement (26) aufweist, das mit dem Fixierelement (6) koppelbar ist, das eine parallelepipedische Form aufweist und an einer seiner Flächen (29) mit vier Ausstülpungen (28) versehen ist, von denen jede in der Nähe eines Scheitels der Fläche (29) angeordnet ist, wobei die Ausstülpungen (28) dazu ausgebildet sind, eine Druckkopplung mit zugeordneten Vertiefungen (30) zu bewirken, die in der Nähe der Scheitel der ersten Fläche (25) des Fixierelementes (6) vorgesehen sind.

10. Schutzvorrichtung (1) nach Anspruch 9, bei der das Abstandselement (26) mit einem Paar von weiteren Schlitzen (27a und 27b) vorgesehen ist, derart, dass diese dann, wenn das Abstandselement (26) mit dem Fixierelement (6) gekoppelt ist, mit den Schlitzen (22a bzw. 22b) des Fixierelementes (6) ausgerichtet ist.

11. Schutzvorrichtung (1) nach irgendeinem vorhergehenden Anspruch, bei dem das Schutzelement (4) die Form einer Platte aufweist und an zwei gegenüberliegenden Seiten mit betreffenden rohrförmigen Schlitzen (31) versehen ist, die zur Einführung an betreffenden Trageelementen (5) geeignet sind.

12. Schutzvorrichtung (1) nach Anspruch 12, bei der jeder rohrförmige Schlitz (31) wenigstens einem weiteren rohrförmigen Schlitz (32) zugeordnet ist, der parallel zu dem rohrförmigen Schlitz (31) ist.

13. Schutzvorrichtung (1) nach Anspruch 12, mit einer Mehrzahl von weiteren rohrförmigen Schlitzen (32), die zueinander parallel sind und parallel zu den rohrförmigen Schlitzen (31) sind, wobei die weiteren rohrförmigen Schlitze (32) über die gesamte Oberfläche des Schutzelementes (4) verteilt sind.

14. Schutzvorrichtung (1) nach irgendeinem vorhergehenden Anspruch, ferner umfassend ein Schutzzusatzteil (32), das mit einem abgeflachten Körper (33) mit einem gerundeten Ende (34) versehen ist, wobei der abgeflachte Körper (33) eine Form und Größe aufweist, derart, dass er in das erste gabelförmige Ende (16) einer zweiten Komponente (11) eingeführt werden kann.

## Revendications

1. Dispositif de protection (1) pour des plantes ornementales extérieures, ou un autre matériel, comprenant un élément de protection (4), adapté pour protéger lesdites plantes d'ornement, ou ledit autre matériau, contre les agents atmosphériques et contre la lumière solaire directe, des éléments d'appui (5) pour supporter ledit élément de protection (4), des éléments de fixation (6), pour fixer lesdits éléments d'appui à un élément de support, chaque élément d'appui (5) comprenant un premier composant (8), dont une première extrémité (12) est couplée de manière amovible à un élément de fixation (6) respectif et au moins un second composant (11) qui peut être fixé à une seconde extrémité (13) dudit premier composant (8), ledit au moins un second composant (11) formant un allongement dudit premier composant (8), **caractérisé en ce que** ledit premier composant (8) comprend une première partie sensiblement rectiligne (9) et une seconde partie curviligne (10), ladite première partie (9) comprenant ladite première extrémité (12) et ladite seconde partie (10) comprenant ladite seconde extrémité (13).

2. Dispositif de protection (1) selon la revendication 1, **caractérisé en ce qu'**il comprend une pluralité de seconds composants (11) qui peuvent être fixés ensemble et au premier composant (8).

3. Dispositif de protection (1) selon la revendication 1 ou 2, dans lequel la seconde extrémité (13) dudit premier composant (8) est en forme de fourche et est pourvue de trous traversants (14) qui sont adaptés pour recevoir des éléments de fixation (20).

4. Dispositif de protection (1) selon la revendication 3, dans lequel ledit au moins un second composant (11) est pourvu d'une première extrémité (16) ayant une forme de fourche et d'une seconde extrémité (17) ayant une forme aplatie, ladite seconde extrémité (17) ayant une forme et des dimensions qui sont telles qu'elle est insérée dans la seconde extrémité en forme de fourche (13) dudit premier composant (8), ou dans la première extrémité en forme de fourche (16) d'un autre second composant (11).

5. Dispositif de protection (1) selon la revendication 4, dans lequel la première extrémité (16) dudit au moins un second composant (11) est pourvue de trous traversants supplémentaires (18) qui sont destinés à recevoir lesdits éléments de fixation (20), pour fixer ledit au moins un second composant (11) à un autre second composant (11), et la seconde extrémité (17) dudit au moins un second composant (11) est pourvue d'autres trous traversants supplémentaires (19) qui sont destinés à recevoir lesdits éléments de fixation (20), pour fixer ledit au moins un second composant (11) à un autre second composant (11), ou au premier composant (8).

6. Dispositif de protection (1) selon l'une quelconque des revendications précédentes, dans lequel ledit élément de fixation (6) a sensiblement une forme de parallélépipède et est pourvu d'une cavité longitudinale (36) ayant une forme et des dimensions qui sont telles qu'il est couplé à la première extrémité (12) du premier composant (8) de l'élément d'appui (5).

7. Dispositif de protection (1) selon la revendication 6, dans lequel à l'intérieur de ladite cavité longitudinale (36) est agencé un élément de blocage (23) qui est adapté pour bloquer d'une manière amovible ladite première extrémité (12) dans la cavité longitudinale (36), l'élément de blocage (23) étant inséré dans un trou transversal (15) de ladite première extrémité (12).

8. Dispositif de protection (1) selon la revendication 7, dans lequel sur une première face (25) de l'élément de fixation (6), deux fentes (22a et 22b) sont réalisées, alors que sur une seconde face (24), opposée à la première face (25), trois fenêtres (21a, 21b, 21c) sont réalisées, dont deux (21a et 21b) sont placées à l'opposé des fentes (22a et 22b) correspondantes, une troisième fenêtre (21c) étant placée à l'opposé de l'élément de blocage (23).

9. Dispositif de protection (1) selon la revendication 8, comprenant en outre un élément espaceur (26) qui peut être associé audit élément de fixation (6), a une forme parallélépipède et est pourvu, sur l'une de ses faces (29), de quatre protubérances (28), dont chacune est agencée près d'un sommet de la face (29), lesdites protubérances (28) étant destinées à un couplage par pression avec des évidements (30) correspondants réalisés près des sommets de la première face (25) de l'élément de fixation (6).

10. Dispositif de protection (1) selon la revendication 9, dans lequel ledit élément espaceur (26) est pourvu d'une paire de fentes supplémentaires (27a et 27b), qui, lorsque l'élément espaceur (26) est couplé à l'élément de fixation (6), sont alignées avec les fentes (22a et 22b) de l'élément de fixation (6), respectivement.

11. Dispositif de protection (1) selon l'une quelconque des revendications précédentes, dans lequel ledit élément de protection (4) prend la forme d'une feuille et est pourvu sur deux côtés opposés de fentes tubulaires (31) respectives adaptées pour être insérées sur des éléments d'appui (5) respectifs.

12. Dispositif de protection (1) selon la revendication 12, dans lequel chaque fente tubulaire (31) est associée à au moins une fente tubulaire supplémentaire (32) qui est parallèle à la fente tubulaire (31).

13. Dispositif de protection (1) selon la revendication 12, comprenant une pluralité de fentes tubulaires supplémentaires (32) qui sont parallèles les unes aux autres et parallèles auxdites fentes tubulaires (31), lesdites fentes tubulaires supplémentaires (32) étant distribuées sur la surface complète dudit élément de protection (4).

14. Dispositif de protection (1) selon l'une quelconque des revendications précédentes, comprenant en outre un accessoire de protection (32) pourvu d'un corps aplati (33) avec une extrémité arrondie (34), ledit corps aplati (33) ayant une forme et des dimensions qui sont telles qu'il est inséré dans la première extrémité en forme de fourche (16) d'un second composant (11).
